(19) Europäisches Patentamt
European Patent Office
Office européen des brevets

(11) Publication number: **0 099 224**
**B1**

(12) # EUROPEAN PATENT SPECIFICATION

(45) Date of publication of patent specification: **18.03.87**

(51) Int. Cl.[4]: **G 02 B 6/34,** G 02 B 6/28

(21) Application number: **83303900.1**

(22) Date of filing: **05.07.83**

(54) **Optical coupling device.**

(30) Priority: **07.07.82 US 396118**

(43) Date of publication of application:
**25.01.84 Bulletin 84/04**

(45) Publication of the grant of the patent:
**18.03.87 Bulletin 87/12**

(84) Designated Contracting States:
***DE FR NL***

(56) References cited:
**FR-A-2 499 723**
**GB-A-2 096 350**
**JP-A-57 000 603**
**US-A-4 213 677**

**Patent Abstracts of Japan vol. 6, no. 59, 16 April 1982**

**ELECTRONICS LETTERS, vol. 16, no. 23, November 1980 T. TANAKA et al. "Simple structure high isolation multi/demultiplexer", pages 869, 870**

(73) Proprietor: **Western Electric Company, Incorporated**
**222 Broadway**
**New York, NY 10038 (US)**

(72) Inventor: **Levinson, Frank Howard**
**1032 Main Street**
**Bethlehem Pennsylvania 18018 (US)**

(74) Representative: **Watts, Christopher Malcolm Kelway, Dr. *et al***
**Western Electric Company Limited 5, Mornington Road**
**Woodford Green Essex, IG8 0TU (GB)**

(56) References cited:
**TECHNICAL DIGEST, no. 64, October 1981, New York R.C. MILLER "Optical coupling schemes for bidirectional 2-wavelength fiber optic systems"**

**Patent Abstracts of Japan vol. 6, no. 168, 2 September 1982**

**Patent Abstracts of Japan vol. 5, no. 173, 5 November 1981**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 099 224 B1

Courier Press, Leamington Spa, England.

**Description**

This invention relates to optical coupling devices for diverting light among various optical transmission elements.

With the growth of optical communications systems, the need for coupling devices of various forms has arisen. In such systems, three and four port couplers could serve a variety of purposes. For example, in data communication transmission, bidirectional lines could be set up with the use of an efficient three port coupler where the bidirectional transmission line was at one port and the transmitter and receiver were coupled to a different one of the other ports. In systems where several terminals share a common central processing unit, it is desirable to provide a coupler which will permit each terminal to receive a portion of the light signal while allowing the bulk of the signal to be transmitted to other terminals. At the same time, the terminal should be able to transmit without interferring with its own receiver. Thus, an asymmetric four port coupler is needed. A further type of four port coupler, which can be thought of as a 1×3 power divider, may be useful in cable TV systems where it is desired that each station have the capability of transmitting back to the source of the signal. Thus, in such applications, a coupler is needed which will allow receiving a portion of the incoming signal at one port and transmitting a signal at another port in a direction opposed to the incoming signal while not interferring with the receiver at the other port.

Some proposals have been made for providing three and four port couplers. For example U.S. Patent No. 4,213,677 issued to Sugimoto suggests use of a beam splitter between two graded index of refraction lenses. Light from a fibre coupled to one surface of a lens is partially reflected by the beam splitter back to a fibre coupled to the same surface and partially transmitted to a fibre on the opposite surface of the other lens. Changing the reflectivity of the mirror adjusts the splitting ratio of the incoming light between the two output ports. While such a device performs acceptably, it is generally preferable to keep lens components to a minimum. Other types of three port coupler using a single lens element have required some polishing or grinding which can cause fabrication difficulties.

A type of multiport coupler has been suggested in U.S. Patent No. 4,304,460 issued to Tanaka. There, an array of fibres is coupled to one surface of a graded index of refraction lens and a rotatably mounted mirror positioned at an angle to the lens is provided at the other surface. Incoming light from one fibre is diverted to a selected one of the other fibres by a suitable rotation of the mirror. Some multiplexing may also be accomplished by providing a filter element between the lens and the mirror. In most applications, it is believed that use of a rotating element adds undue complexity and cost to the coupler.

A device as set out in the preamble to claim 1 is disclosed in JP—A—57603 (summarised in English in Patent Abstracts of Japan vol 6, No. 59, 16th April 1982). The focusing element is a quarter-pitch graded index (GRIN) rod and the second end surface is bevelled so as to form two symmetrically disposed facets. These facets are silvered so as to form the reflecting elements. There are four transmission elements disposed at roughly equal intervals in a straight line.

In the invention as claimed there is no requirement for precision bevelling since a focusing element with an ordinary plane perpendicular end face is used. Since the transmission elements are mounted in non-collinear positions they can be grouped closer together and closer to the optical axis. Furthermore the procedure for aligning the transmission elements can be simplified.

Some embodiments of the invention will now be described by way of example with reference to the accompanying drawings, in which:—

Fig. 1 shows a three port coupling device in accordance with the invention;

Fig. 2 is an end view of the device of Fig. 1;

Fig. 3 shows a four port coupler in accordance with the invention;

Fig. 4 is an end view of the device of Fig. 3;

Figs. 5, 6 and 7 show other forms of four port power divider in accordance with the invention;

Fig. 8 shows a five port coupler in accordance with the invention;

Fig. 9 shows another form of four port power divider in accordance with the invention;

Fig. 10 is an end view of one portion of the device shown in Fig. 9; and

Fig. 11 is an end view of another portion of the device shown in Fig. 9.

It will be appreciated that for purposes of illustration, these figures are not drawn to scale.

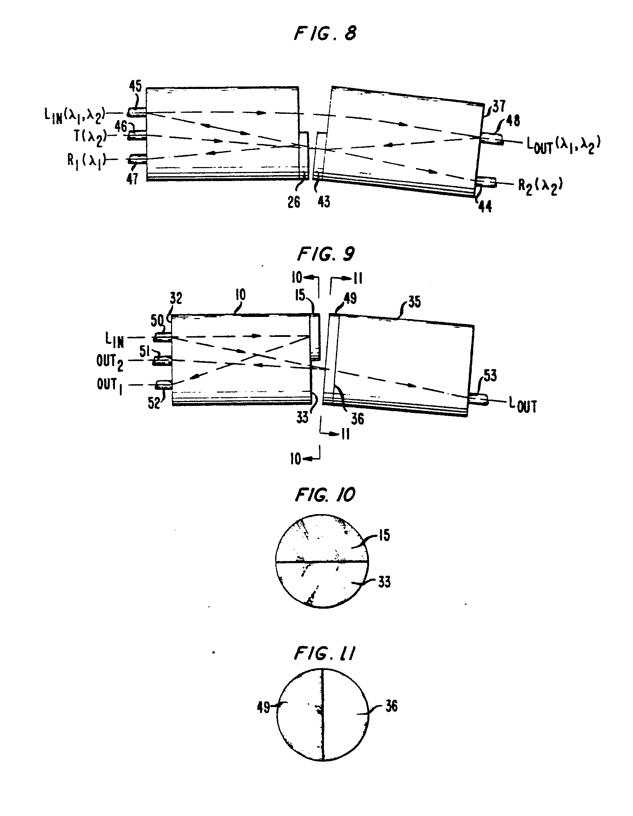

The device of Fig. 1 includes a focusing element, 10, which in this case is a standard cylindrical graded index of refraction (grin) lens. The lens, in this and succeeding examples, has a 1/4 pitch length (approximately 4.7 mm) and a diameter of 1.8 mm. Coupled to one end surface, 32, of the lens, is an array of three optical transmission elements, in this example optical fibres, 11, 12 and 13. The positioning of the fibres is illustrated in the end view of Fig. 2. It will be appreciated that distances between fibres are exaggerated and in actual practice the fibre claddings would probably be in contact. Fig. 2 does represent a preferred positioning of the fibre cores with respect to the optical axis, 14, of the grin lens. That is, the fibres are arranged in a triangular array with all fibre cores approximately equidistant from the axis. In actual practice, the precise positioning of the array will be adjusted as described later. In close proximity to the opposite end surface, 33, of the lens, a pair of at least partially reflecting elements, 15 and 16, are positioned. In this example, both elements are fully reflecting mirrors. Mirror 15 is deposited on the end surface in a semi-circular pattern so as to cover approximately one-half of the end surface (as, for example, shown in Fig. 10). Referring back to Fig. 1, mirror 16 is positioned so that it forms an angle α with mirror 15. The angle between the mirrors is fixed by an optical cement, 34, such as a UV curable cement sold by Norland Products. Inc. under the designation UV61. Generally, the angle α will range from 0.5 to 10 degrees, and in this particular example is approximately 1.3 degrees.

In operation, incoming light from fibre 11 spreads out owing to the graded index of refraction and length of the lens so as to be incident on essentially the entire face 33. The arrows in Fig. 1 are intended to represent schematically the approximate centre of the portion of the light ray reflected by each mirror to illustrate the general path followed by each light component. Thus, the portion of the light which is reflected by mirror 15 is incident on fibre 13 which in this example is coupled to the signal output ($L_{out}$). The portion of the light incident on the end surface portion not covered by mirror 15 is reflected by mirror 16. As a result of the angular position of mirror 16, the reflected light is incident on fibre 12 which in this example is coupled to a receiver port (R). Devices in this example typically have insertion losses of 0.7 dB for light from 11→13, 0.7 dB for light from 11→12, and 32 dB for light from 12→13.

One of the advantages of this form of coupler is the fact that the splitting ratio of the incoming light among the other transmission elements can be varied according to particular needs by just varying the area of the mirror 15. Thus, although in this example the amount of light to fibres 12 and 13 is equal, more light could be directed to fibre 13 and correspondingly less light to 12 by increasing the area of the mirror 15. Decreasing the area of mirror 15 would, of course, have an opposite effect.

Although Fig. 1 illustrates a typical three port coupler at a receiving portion of a system, the device could just as easily be used in the transmitting portion by coupling fibre 13 to the $L_{in}$ port, fibre 11 to the $L_{out}$ port and fibre 12 to the transmitter port. Such a device essentially operates in the reverse direction from the previous example. Thus, input light from fibre 13 would be reflected by mirror 15 onto fibre 11 and light from fibre 12 would be reflected by mirror 16 onto fibre 11.

Further, the device of Fig. 1 may also be used for coupling a bidirectional line to a transceiver. For example, the input-output port could be coupled to fibre 11, the transmitter port coupled to fibre 12 and the receiver port coupled to fibre 13. The incoming light on fibre 11 will be incident on both the transmitter and receiver ports, but this does no harm to the transmitter. The important characteristic of the device for such applications is the high degree of optical isolation between the transmitter port (fibre 12) and the receiver port (fibre 13). In this example, with a splitting ratio of 1:1, the isolation is typically approximately 32 dB. When the splitting ratio was increased to 1:20 (either increasing or decreasing the size of mirror 15), the isolation increased to approximately 40 dB.

In the fabrication of the device, a standard grin lens was utilized having the dimensions given previously. The mirror 15 was formed on surface 33 using a metal mask in the area to remain uncovered and then depositing a mirror coating by a standard gold evaporation. An array of fibres, 11—13, contained within a standard capillary tube (not shown) having an as yet uncured cement at its end, was then brought into contact with end surface 32. While light was transmitted from fibre 11, the array was positioned to maximize light coupling between fibres 11 and 13, and then the cement was cured. The other mirror 16, was positioned near the opposite end surface, 33, with the as yet uncured cement, 34, therebetween. The angle of the mirror was adjusted while light was transmitted from fibre, 11, to maximize light coupling between fibres, 11 and 12. The cement was then cured to fix the position of the mirror. Alignments were done using standard micro-positioning apparatus. Similar fabrication sequences can be employed for the other devices to be described.

An asymmetric four port coupler is illustrated in Fig. 3, where elements corresponding to those of Fig. 1 are similarly numbered. The angular position of mirror 16 is the complement of that in the previous example. Here, an array of four optical fibres, 17, 18, 19 and 20, is coupled to the end surface 32. Fibre 19 is coupled to the input port, $L_{in}$, fibre 20 to the output port, $L_{out}$, fibre 18 to the receiver port, R, and fibre 17 to the transmitter port, T. Again, the arrows indicate the general paths of light rays in the device and a detailed description of the operation is not believed to be necessary.

Although the fibres are shown in a line in the plane of the drawing for illustrative purposes, the actual position of the fibres in a preferred embodiment is illustrated in Fig. 4. Again, distances are exaggerated. Each fibre is placed with its centre at a corner of a rectangle having sides of approximately $S_1$=228.6 µm and $S_2$=254 µm. This can be done with standard alignment chips where the fibres rest in grooves formed in multilayers of a material such as silicon. The advantage of such a configuration for the fibres is that once the array is positioned with respect to mirror 15 to optimize coupling between fibres 19 and 18, then coupling between fibres 17 and 20 is automatically optimized as well. The only alignment when remaining is the coupling between fibres 19 and 20 which is optimized by adjusting the angle of mirror 16. To obtain this advantage in alignment, the fibres can be at the corners of a square or any other parallelogram.

A key factor in the operation of a device of this type is the degree of optical isolation between the transmitter and receiver ports. In this example, the insertion loss between fibres 17→18 (T→R) was greater than 43 dB. A loss of at least 25 dB is recommended. The loss for $L_{in}$→$L_{out}$ was approximately 4.5 dB, the loss for $L_{in}$→R was approximately 3.3 dB, and the loss for T→$L_{out}$ was approximately 3.0 dB.

The device illustrated in Fig. 5 uses a second focusing element, in this example another grin lens 35 identical to the first grin lens 10, in close proximity to the end surface of the first focusing element 10. Further, a beam splitting element, 21, is substituted for the fully reflecting mirror 16. In this example, the beam splitting element, 21, is a standard multilayer dielectric film which is deposited on to one end surface, 36, of the second grin lens 10. An array of three fibres, 22, 23 and 24 is coupled to the end surface, 32, of grin lens, 10, and fibre 25 is coupled to the opposite end surface, 37, of the second grin lens 35. Thus, light transmitted by fibre 22 from the $L_{in}$ port and incident on element 21 is partially transmitted to fibre 25 ($L_{out}$) and partially reflected to fibre 24 which is coupled to one of the output taps ($out_1$). The angle between the optical axes of elements 15 and 21 is adjusted to optimize coupling to that output. In this example, the angle is approximately 1.3 degrees. The portion of the light incident on mirror 15 is reflected to fibre 23 which is coupled to the other output tap ($out_2$). In this example, the ratio of coupling to fibre 23, 24 and 25 is 2:1:1, but the light input can be divided among three outputs by any desired ratio depending upon the area of mirror 15 and the reflectivity of beam splitter 21. One of the key advantages of this type of coupler is the fact that either of the output taps may be used as a transmitter port. Here, however, the light from such a transmitter would be incident upon the $L_{in}$ port so that information could be sent back to the source.

Another form of such a four port coupler is illustrated in Fig. 6. Here, a filter element, 26, and a mirror, 27, are positioned in close proximity to one end, 33, of the first grin lens 10. Again, an array of three fibres, 28, 29 and 30 is coupled at the opposite end, 32, of the first grin lens, and a fibre, 31, is coupled to the opposite end, 37, of the other grin lens. In this example, filter 26 is deposited directly on end 33 of lens 10 and mirror 27 is deposited directly on end 36 of lens 35. (The optical cement between the two end faces, 33 and 36, used to maintain the angle between filters is omitted from the figures for the sake of clarity). Here, the incoming signal from fibre 28 has two wavelength components, $\lambda_1$ and $\lambda_2$. The portion of the signal not incident on the filter or mirror (which covers only one-half of the end faces in this example) is transmitted essentially unaffected to fibre 31. The bandpass of the filter is chosen so that of the remaining portion of the input, the $\lambda_1$ component is reflected by filter 26 onto fibre 29 and the $\lambda_2$ component is reflected by mirror 27 onto fibre 30 the latter incidence resulting from the angle of mirror 27. If the operation of the device in Fig. 6 is changed slightly so that one wavelength component is transmitted from $L_{in} \rightarrow L_{out}$ and the other wavelength component is transmitted from $L_{out} \rightarrow L_{in}$, the customer can transmit back to the source on a wavelength different from the one received so that cross talk is minimized. For example, if the $\lambda_1$ component is being transferred from $L_{in} \rightarrow L_{out}$, fibre 30 can be coupled to the transmitter port while fibre 29 remains coupled to a receiver port.

An alternative design for the device of Fig. 6 is illustrated in Fig. 7. Here, the device utilizes a combination of partial area mirror 15 and filter element 38 in close proximity to the end surface 33 of the first lens 10. The array of fibres 39, 40, 41, is coupled at the opposite end surface 32 and the angle between the optical axes of elements 15 and 38 is adjusted so that when input light of wavelength components $\lambda_1$ and $\lambda_2$ is incident on filter 38, the $\lambda_1$ component will be reflected onto fibre 40 and the $\lambda_2$ component will be transmitted through the second lens 35 onto fibre 42 which is coupled to the opposite surface 37. The portion of input light incident on mirrors 15 (both $\lambda_1$ and $\lambda_2$ components) is incident on fibre 41.

The device illustrated in Fig. 8, has more than four ports. This device is similar to the device illustrated in Fig. 6 except for the addition of fibre 44 at the opposite end surface 37 of the second focusing element. The device can be considered a combination of an asymmetric four port coupler and a multiplexing four port coupler. In operation, light of wavelength components $\lambda_1$ or $\lambda_2$ can be transmitted in either direction between fibres 45 and 48 as in the case of Fig. 6. (In this example it is assumed that light of wavelength $\lambda_1$ is transmitted from 45 to 48 and light of wavelength $\lambda_2$ is transmitted from 48 to 45). Light of wavelength $\lambda_2$ can be transmitted from fibre 46 reflected by mirror 43 onto the fibre 45 and thereby be transmitted back to the source. Light of the other wavelength component $\lambda_1$ can be received by the other fibre 47 on end surface 32 owing to reflection from filter 26. By the same token, light of the $\lambda_2$ component being transmitted upstream from fibre 48, which is incident on mirror 43, is reflected back onto fibre 44 which is coupled to the other receiver port $R_2$. Thus, the device allows receiving a signal from the source ($L_{in}$) at port $R_1$ or from somewhere farther downstream ($L_{out}$) at port $R_2$ and permits transmitting a signal back to the source from port T. Here again the ports $T(\lambda_2)$ and $R_2(\lambda_2)$ are highly isolated by more than 30 dB.

Finally, as illustrated in Figs. 9, 10 and 11, a power divider such as that shown in Fig. 5 need not require use of a beam splitter 21. Rather, a combination of partial area mirrors, 15 and 49, formed on end surfaces 33 and 36 of lenses 10 and 35 respectively, can be used to achieve the same function with a proper choice of the area covered by each mirror. Thus, with the half mirrors used in Fig. 9, the position of mirror, 49, can be rotated 90 degrees with respect to the position of mirror 15 as shown in the end views of Figs. 10 and 11. This leaves one quadrant of the grin lens end surfaces, 33 and 36, uncovered so that a portion of light from fibre 50 can be transmitted through both lenses to fibre 53. The portion of light incident on mirror 15 will be reflected onto fibre 52 and the portion of light incident on mirror 49 will be incident on fibre 51.

As in previous examples, either fibre, 51 or 52, can be used to transmit a signal back to the source ($L_{in}$).

Several additional modifications of the invention are possible. For example, the reflecting elements could be formed on the end faces of the focusing elements by photolithographic etching instead of by masked deposition. Further, although the fibres are all shown as being the same sizes, fibres of varying diameters could be used on a single device depending on particular needs. It should also be realized that the term "optical transmission element" as used in this application is intended to include any component used in optical transmission, and could be a light source or detector coupled directly to an end surface of one of the focusing elements.

**Claims**

1. An optical device for diverting light from one optical transmission element to another, an optical transmission element being any component used for optical transmission, such as an optical fibre, a light source or a light detector, said device comprising a light focusing element (10) having two end surfaces (32, 33); three or more optical transmission elements (11, 12, 13) coupled to one end surface (32); and a first and a second at least partially reflecting element (15, 16) in close proximity to the second end surface (33) and disposed at an angle to each other, the first reflecting element (15) being formed on, but not completely covering, the second end surface characterised in that the said second end surface (33) is planar and perpendicular to the optical axis (14) of the focusing element (10), in that the second reflecting element (16) is adjacent to the said second end surface and in that the optical transmission elements (11, 12, 13) are coupled to the said one end surface at non-collinear positions.

2. A device as claimed in claim 1 wherein the said non-collinear positions are approximately equidistant from the said optical axis (14).

3. A device as claimed in claim 1 or claim 2 wherein four optical transmission elements (17, 18, 19, 20) are coupled to the said one end surface (32) so that the first reflecting element (15) optically couples together a first pair (18, 19) and also a second pair (17, 20) of the transmission elements and the second reflecting element (16) optically couples together one (19) of the transmission elements of the first pair with one (20) of the transmission elements of the second pair characterised in that the said non-collinear positions are at the corners of a parallelogram, the transmission elements of each of the said pairs being coupled at positions at opposite corners of the parallelogram.

4. A device as claimed in claim 1 or claim 2 including a second light focusing element (35) having two end surfaces (36, 37) with one end surface (36) positioned in close proximity to the reflecting elements (15, 21) and at least one transmission element (25) coupled to the other end surface (37) of the second focusing element.

5. A device as claimed in claim 4 wherein a first one (28) of the transmission elements coupled to said one end surface of the first focusing element is adapted to transmit light of more than one wavelength component and at least one of the reflecting elements (26) is a filter which reflects at least one of the components and transmits the other components.

6. A device as claimed in claim 5 wherein a second (46, Fig. 8) one of the transmission elements coupled to said one end surface of the first focusing elements comprises a light source to transmit light of one of said wavelength components (λ2) back to the first transmission element (45).

7. A device as claimed in any of claims 4 to 6 wherein the second reflecting element (49) is formed on but does not completely cover the said one end surface of the second focusing element, and the reflecting elements are arranged so that there is at least a portion of both end surfaces through which light can pass from a transmission element coupled to the first focusing element to a transmission element coupled to the second focusing element without being incident on one of the reflecting elements.

**Patentansprüche**

1. Optisches Bauelement zum Abzweigen von Licht aus einem optischen Übertragungselement auf ein anderes, wobei ein optisches Übertragungselement jegliche für optische Übertragung benutzte Komponente, wie z. B. eine optische Faser, eine Lichtquelle oder ein Lichtdetektor, ist, umfassend

ein Lichtfokussierelement (10) mit zwei Stirnflächen (32, 33),

drei oder mehr optische Übertragungselemente (11, 12, 13) die an eine Stirnfläche (32) gekoppelt sind, und

ein erstes und ein zweites wenigstens teilweise reflektierendes Element (15, 16), die in dichter Nähe zur zweiten Stirnfläche (33) und unter einem Winkel zueinander angeordnet sind, wobei das erste reflektierende Element (15) auf der zweiten Stirnfläche, aber diese nicht vollständig bedekkend, ausgebildet ist, dadurch gekennzeichnet, daß

die zweite Stirnfläche (33) plan ist und senkrecht zur optischen Achse (14) des Fokussierelementes (10) verläuft,

das zweite reflektierende Element (16) benachbart der zweiten Stirnfläche gelegen ist und

die optischen Übertragungselemente (11, 12, 13) an die eine Stirnfläche in nicht-killinearen Stellungen angekoppelt sind.

2. Bauelement wie in Anspruch 1 beansprucht, wobei

die nicht-kollinearen Stellungen annähernd äquidistant zur optischen Achse (14) liegen.

3. Bauelement wie in Anspruch 1 oder 2 beansprucht, wobei

vier optische Übertragungselemente (17, 18, 19, 20) mit der einen Stirnfläche (32) gekoppelt sind derart, daß das erste reflektierende Element (15) ein erstes Paar (18, 19) der Übertragungselemente miteinander optisch koppelt, ebenso auch ein zweites Paar (17, 20) der Übertragungselemente, und das zweite reflektierende Element (16) eines (19) der Übertragungselemente des ersten Paares mit einem (20) der Übertragungselemente des zweiten Paares optisch koppelt, dadurch gekennzeichnet, daß

die nicht-kollinearen Stellungen an den Ecken eines Parallelogrammes liegen und

die Übertragungselemente jedes Paares an bei gegenüberliegenden Ecken des Parallelogrammes liegenden Stellungen gekoppelt sind.

4. Bauelement wie in Anspruch 1 oder 2 beansprucht, umfassend

ein zweites lichtfokussierendes Element (35) mit zwei Stirnflächen (36, 37), wobei eine Stirnfläche (36) in dichter Nähe zu den reflektierenden Elementen (15, 21) liegt und wenigstens ein Übertragungselement (25) an die andere Stirnfläche (37) des zweiten Fokussierelements gekoppelt ist.

5. Bauelement wie in Anspruch 4 beansprucht, wobei

ein erstes (28) der an die eine Stirnfläche des ersten Fokussierelementes angekoppelten Übertragungselemente Licht von mehr als einer Wellenlängenkomponente zu übertragen vermag und

wenigstens eines der reflektierenden Elemente (26) ein Filter ist, das wenigstens eine der Komponenten reflektiert und die anderen Komponenten durchläßt.

6. Bauelement wie in Anspruch 5 beansprucht, wobei

ein zweites (46, Fig. 8) der and die eine Stirnfläche des ersten Fokussierelementes gekoppelten Übertragungselemente eine Lichtquelle umfaßt, um Licht einer der Wellenlängenkomponenten (λ2) zum ersten Übertragungselement (45) zurück zu übertragen.

7. Bauelement wie in einem der Ansprüche 4 bis 6 beansprucht, wobei

das zweite reflektierende Element (49) auf der einen Stirnfläche des zweiten Fokussierelementes ausgebildet ist aber diese nicht vollständig bedeckt, und

die reflektierenden Elemente so angeordnet sind, daß es wenigstens einen Teil beider Stirnflächen gibt, durch den Licht von einem an das erste Fokussierelement gekoppelten Übertragungselement zu einem an das zweite Fokussierelement gekoppelten Übertragungselement passieren kann, ohne auf eines der reflektierenden Elemente einzufallen.

**Revendications**

1. Un dispositif optique destiné à dévier de la lumière d'un élément de transmission optique vers un autre, un élément de transmission optique étant un composant quelconque utilisé pour une transmission optique, tel qu'une fibre optique, une source de lumière ou un détecteur de lumière, ce dispositif comprenant un élément de focalisation de lumière (10) ayant deux surfaces d'extrémité (32, 33); trois éléments de transmission optique (11, 12, 13), ou plus, couplés à une première surface d'extrémité (32); et des premier et second éléments au moins partiellement réfléchissants (15, 16) placés à proximité immédiate de la seconde surface d'extrémité (33) et faisant un angle entre eux, le premier élément réfléchissant (15) étant formé sur la seconde surface d'extrémité, mais ne recouvrant pas complètement cette surface, caracterise en ce que la seconde surface d'extrémité (33) est plane et perpendiculaire à l'axe optique (4) de l'élément de focalisation (10), en ce que le second élément réfléchissant (16) est adjacent à la seconde surface d'extrémité et en ce que les éléments de transmission optique (11, 12, 13) sont couplés à la première surface d'extrémité dans des positions non alignées.

2. Un dispositif selon la revendication 1, dans lequel les positions non alignées sont approximativement équidistantes de l'axe optique (14).

3. Un dispositif selon la revendication 1 ou la revendication 2, dans lequel quatre éléments de transmission optique (17, 18, 19, 20) sont couplés à la première surface d'extrémité (32) de façon que le premier élément réfléchissant (15) couple optiquement ensemble une première paire (18, 19) et également une seconde paire (17, 20) des éléments de transmission, et que le second élément réfléchissant (16) couple optiquement ensemble l'un (19) des éléments de transmission de la première paire et l'un (20) des éléments de transmission de la seconde paire, caracterise en ce que les positions non alignées se trouvent aux sommets d'un parallélogramme, les éléments de transmission de chacune des paires étant couplés à des positions situées à des sommets opposés du parallélogramme.

4. Un dispositif selon la revendication 1 ou la revendication 2, comprenant un second élément de focalisation du lumière (35) ayant deux surfaces d'extrémité (36, 37), avec une surface d'extrémité (36) placée à proximité immédiate des éléments réfléchissants (15, 21), et au moins un élément de transmission (25) couplé à l'autre surface d'extrémité (37) du second élément réfléchissant.

5. Un dispositif selon la revendication 4, dans lequel un premier (28) des éléments de transmission couplés à la première surface d'extrémité du premier élément de focalisation est conçu de façon à transmettre de la lumière comprenant plus d'une composante de longueur d'onde, et l'un au moins des éléments réfléchissants (26) est un filtre qui réfléchit l'une au moins des composantes et qui transmet les autres composantes.

6. Un dispositif selon la revendication 5, dans lequel un second (46, figure 8) des éléments de transmission couplés à la première surface d'extrémité du premier élément de focalisation comprend une source lumineuse qui renvoie vers le premier élément de transmission (45) de la lumière correspondant à l'une des composantes de longueur d'onde ($\lambda_2$).

7. Un dispositif selon l'une quelconque des revendications 4 à 6, dans lequel le second élément réfléchissant (49) est formé sur la première surface d'extrémité du second élément de focalisation, mais ne recouvre pas complètement cette surface, et les éléments réfléchissants sont disposés de façon qu'il existe une partie au moins des deux surfaces d'extrémité à travers laquelle la lumière puisse passer d'un élément de transmission couplé au premier élément de focalisation, vers un élément de transmission couplé au second élément de focalisation, sans tomber sur l'un des éléments réfléchissants.

FIG. 1

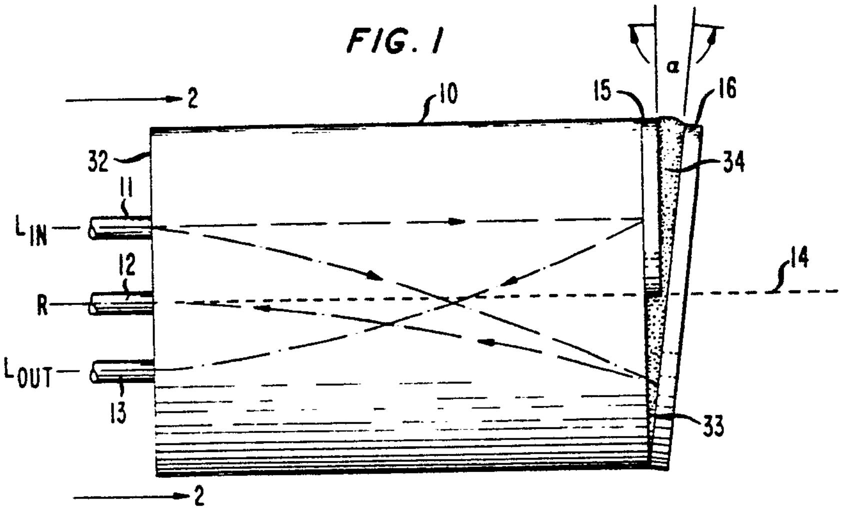


FIG. 2

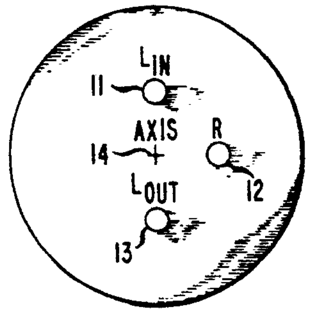


FIG. 3

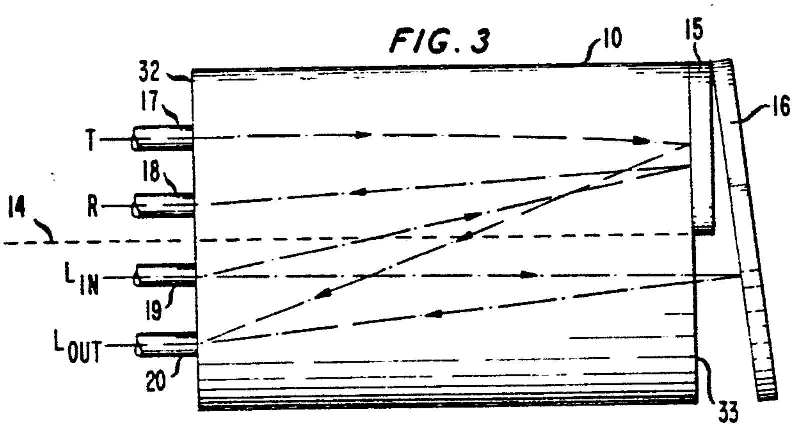


FIG. 4

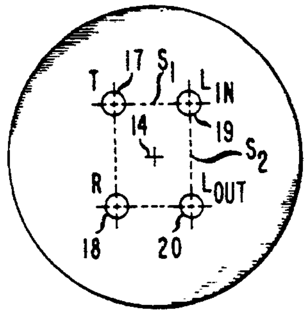

FIG. 5

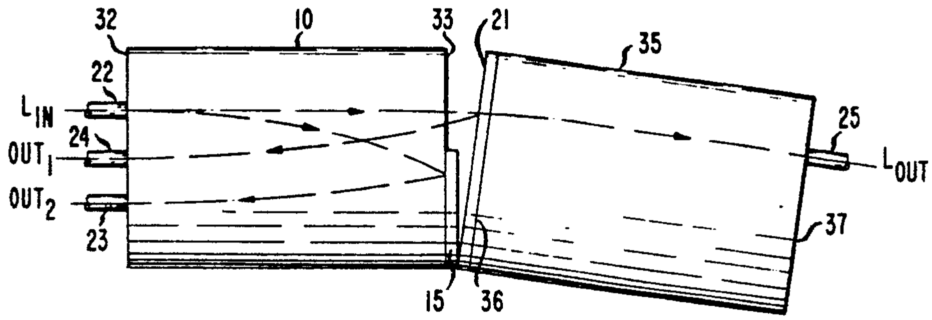


FIG. 6

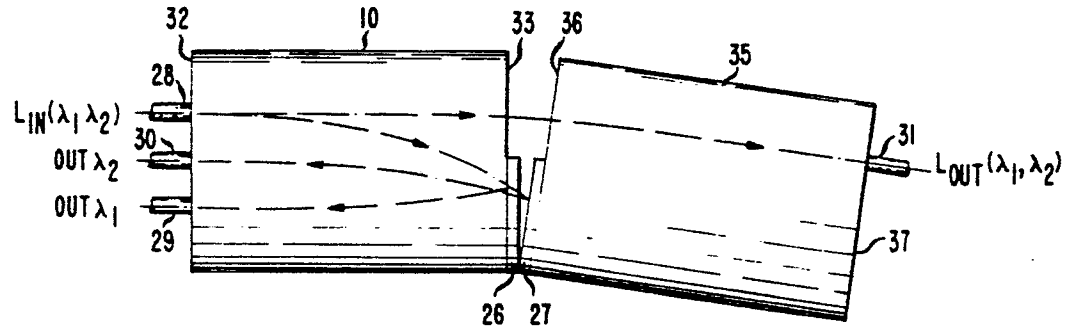


FIG. 7

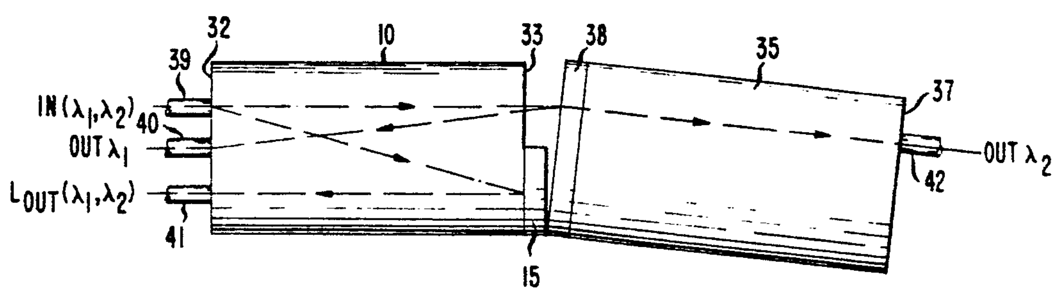

FIG. 8

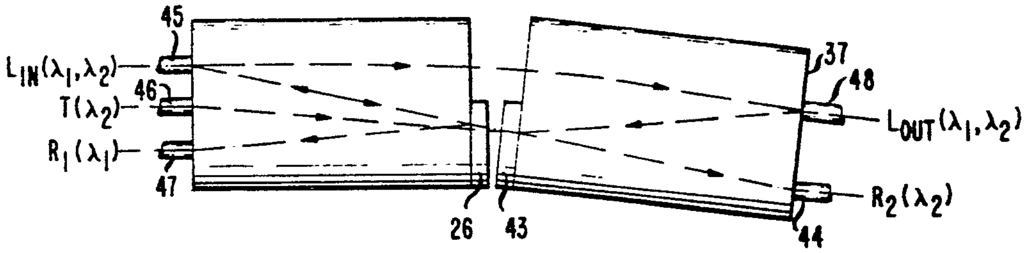


FIG. 9

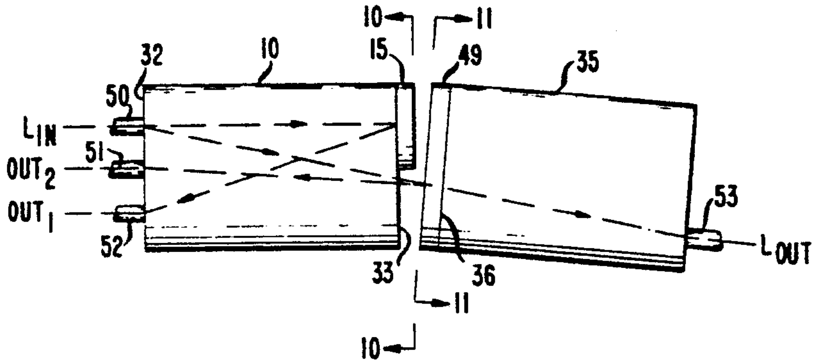


FIG. 10

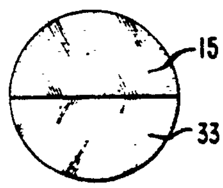


FIG. 11